# FASCICULE DE BREVET EUROPEEN

(11) **EP 1 930 220 B1**
(45) Date de publication et mention de la délivrance du brevet: **17.03.2010**
(21) Numéro de dépôt: 07121594.1
(22) Date de dépôt: 27.11.2007
(51) Int. Cl.: B60T 13/74, B60T 17/16, F16D 65/14, B60T 13/38

(54) **Commande de frein de stationnement**
Steuerung einer Feststellbremse
Parking brake control

(30) Priorité: 06.12.2006 FR 0610651
(43) Date de publication de la demande: 11.06.2008
(73) Titulaire: ROBERT BOSCH GMBH, 70442 Stuttgart (DE)
(72) Inventeur: Dupuis, Vincent, 94100 Saint Maur (FR); Beccafico, Nathalie, 93140 Garges les Gonesse (FR)
(74) Mandataire: Hurwic, Aleksander Wiktor

(56) Documents cités:
- EP-A1- 0 891 908
- DE-A1- 10 327 185
- DE-B1- 2 426 052
- FR-A- 2 599 101
- FR-A1- 2 278 015
- US-A- 3 572 472

## Description

La présente invention concerne une commande de frein de stationnement, en particulier pour véhicule automobile.

Les véhicules automobiles comportent un dispositif auxiliaire de freinage ou frein de stationnement indépendant du système principal de freinage actionné par une pédale, pour immobiliser le véhicule à l'arrêt et éventuellement le ralentir en cas de défaillance du système principal de freinage.

La commande de ce dispositif auxiliaire est traditionnellement réalisée par un levier actionné à la main, qui est relié par un câble coulissant dans une gaine au dispositif de freinage qui applique et serre des garnitures de frottement sur une surface rotative d'un disque ou d'un tambour lié à la roue.

Des systèmes de freinage automatiques sont notamment décrits dans FR-A-2 599 101, DE 103 27185 et US-A-3 572 472.

Lorsque cette commande est automatisée, elle est associée à une source de pression hydraulique qui applique la pression d'un liquide à un piston coulissant dans un cylindre récepteur pour appliquer une force de serrage aux garnitures de frottement. Un moyen mécanique est prévu pour maintenir la force de serrage et assurer l'immobilisation du véhicule dans le temps.

La source de pression hydraulique faire partie d'un dispositif automatisé de commande ou de correction du système principal de freinage, assurant des fonctions d'antiblocage des roues, d'anti-patinage, de contrôle de trajectoire ou d'anti-collision par exemple.

Une commande auxiliaire de freinage de ce type est décrite dans le document FR-A1-2847871 et comprend un moyen de blocage d'un piston préalablement mis en pression, pour le serrage de patins portant des garnitures de freinage et disposés dans un étrier de part et d'autre d'un disque de frein.

Un inconvénient de cette commande est que la mise en pression du piston est dépendante de la source de pression hydraulique. L'application d'une force de freinage sur un tambour ou un disque de frein nécessite le déplacement d'un certain volume de liquide pour réaliser d'abord une course morte venant appliquer les garnitures au contact des faces en rotation, puis la montée en pression avec un certain déplacement du piston compensant les déformations élastiques des organes mis en contrainte. La course totale peut être relativement importante, ce qui est désavantageux.

Un autre inconvénient est que le dispositif de freinage peut subir des déformations après le serrage du frein de stationnement, par exemple au refroidissement des freins échauffés par des freinages répétés. Il est alors nécessaire de prévoir des moyens complémentaires pour garantir dans le temps le maintien d'un serrage suffisant du frein de stationnement et éviter tout risque de déplacement du véhicule garé sur une surface en pente.

La présente invention a notamment pour but d'éviter ces inconvénients grâce à une solution simple, efficace et économique, permettant de serrer rapidement et de garantir le maintien du serrage d'un frein de stationnement.

Elle propose à cet effet une commande de frein de stationnement, en particulier pour véhicule automobile, reliée par un moyen de traction à un moyen de freinage d'une roue du véhicule, caractérisée en ce qu'elle comprend :
- un piston guidé dans un cylindre et ayant une première extrémité reliée au moyen de traction et une seconde extrémité,
- un ressort monté dans le cylindre en appui sur la première extrémité du piston et sollicitant constamment le piston dans le sens correspondant au serrage du frein,
- des moyens d'alimentation du cylindre en fluide sous pression, débouchant dans le cylindre du côté de la deuxième extrémité du piston pour déplacer le piston dans le sens correspondant au desserrage du frein,
- et des moyens de verrouillage du piston dans une position de repos, ces moyens de verrouillage étant commandés par un calculateur et déplaçables entre une position inactive écartée du piston et une position active en contact avec le piston.

Un avantage essentiel de la commande selon l'invention est que le ressort étant comprimé dans la position de repos ou de non-utilisation du frein de stationnement, on dispose d'une énergie qui peut être libérée très rapidement pour serrer le frein de manière quasiment instantanée. De plus, le ressort peut garder un certain niveau de compression en position de serrage, de sorte qu'il reste une réserve d'énergie pour suivre d'éventuelles déformations du frein par exemple au refroidissement et maintenir un serrage suffisant de ce frein.

Selon un mode préféré de réalisation de l'invention, les moyens de verrouillage sont à commande électrique ou électromagnétique pilotée par un calculateur qui commande aussi l'alimentation du cylindre en fluide sous pression.

Selon une autre caractéristique de l'invention, le ressort associé au piston est formé d'un empilage de rondelles Belleville.

Avantageusement, les moyens de verrouillage sont sollicités en appui sur le piston pour le bloquer automatiquement quand il est ramené en position de repos.

Par ailleurs, un ressort additionnel à armement manuel est prévu pour solliciter les moyens de verrouillage en appui sur le piston en cas de défaillance de la commande électrique ou électromagnétique.

Le cylindre est avantageusement relié au circuit hydraulique du système principal de freinage, et peut être alimenté en fluide sous pression par une centrale de pression hydraulique alimentant le système principal de freinage pour une commande ou une correction automatisée du freinage comme une commande d'antiblocage des roues, d'anti-patinage, de contrôle de trajectoire ou d'anti-collision. En cas de défaillance de cette centrale, le cylindre peut être alimenté en fluide sous pression par action du conducteur sur la pédale de frein.

De préférence, la course de détente du ressort est déterminée pour suivre de faibles déplacements du moyen de traction dus à des variations de température du frein de stationnement de manière à conserver une efficacité de freinage suffisante du véhicule.

Selon un mode de réalisation particulier de l'invention, le moyen de freinage comprend un frein à tambour monté dans le disque de frein d'une roue du véhicule.

Le cylindre de la commande est solidaire d'un plateau fixe du frein à tambour, et est orienté sensiblement perpendiculairement à ce plateau.

Le piston coulissant dans le cylindre de la commande peut exercer une traction sur un câble de liaison au frein à tambour.

La commande selon l'invention peut sans difficultés être montée à la place d'une commande manuelle, et inversement.

L'invention sera mieux comprise et d'autres caractéristiques et avantages apparaîtront plus clairement à la lecture de la description ci-après donnée à titre d'exemple en référence aux dessins annexés dans lesquels :
- les figures 1 à 3 sont des vues en coupe d'une commande suivant l'invention représentant trois étapes de l'actionnement du frein ;
- la figure 4 est un diagramme illustrant l'actionnement du frein ;
- la figure 5 est une vue en coupe de la commande lors d'une séquence de réarmement ;
- la figure 6 est un diagramme illustrant le réarmement de la commande ;
- la figure 7 est une vue en coupe de la commande avec un dispositif manuel d'intervention ;
- les figures 8 et 9 sont des vues en perspective d'un frein de stationnement à commande selon l'invention.

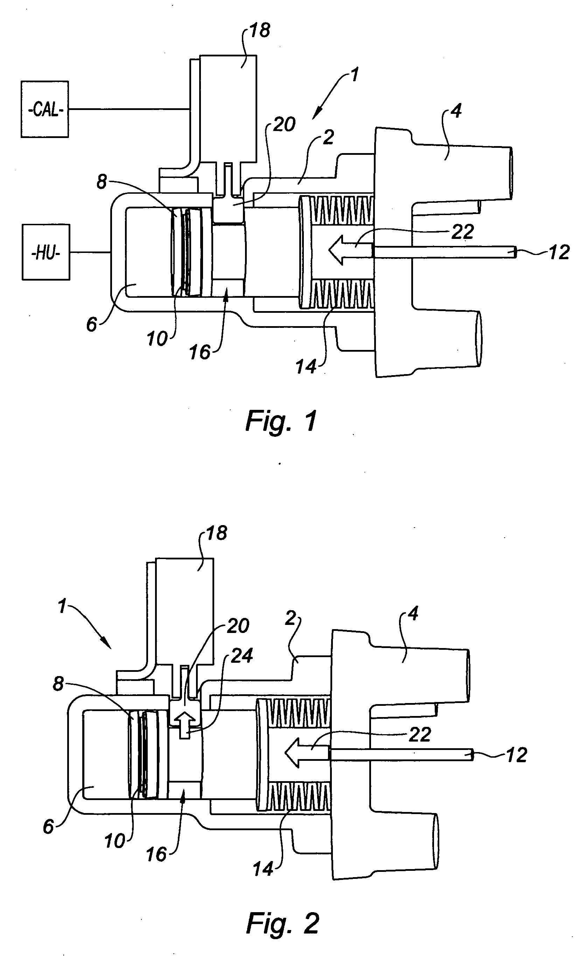

Les figures 1 à 3 représentent un actionneur 1 vu en coupe comportant un corps globalement cylindrique 2 fixé par une extrémité axiale à un bras de suspension 4 lié au châssis d'un véhicule, recevant dans un alésage cylindrique un piston 8 coulissant axialement. Une chambre 6 est formée entre le fond borgne de l'alésage et l'extrémité du piston 8 comportant un joint d'étanchéité annulaire 10 et est alimentée en fluide sous pression par une centrale hydraulique HU commandée par un calculateur CAL.

L'autre extrémité du piston 8 du côté du bras 4 est solidaire d'un câble 12 qui peut être tiré par le piston 8 pour agir sur un dispositif de freinage d'une roue. Un accumulateur d'énergie constitué d'un ressort 14 travaillant en compression prend appui d'un côté sur le piston 8 et de l'autre sur le bras 4 pour exercer une poussée axiale 22 sur le piston et le solliciter dans le sens l'écartant du bras. Le ressort 14 est ici formé d'un empilage de rondelles Belleville montées en opposition deux par deux, entourant une tige cylindrique de piston ayant un diamètre réduit et prenant appui axialement sur un épaulement du piston 8.

Une gorge annulaire 16 est formée sur le piston 8 en arrière du joint 10 et a en coupe axiale une section rectangulaire. Un actionneur électromagnétique 18 commandé par le calculateur CAL est fixé au cylindre 2 et comporte un noyau plongeur mobile perpendiculairement à l'axe du piston 8. Le noyau porte à son extrémité un verrou 20 ayant en coupe passant par l'axe du piston une section rectangulaire qui correspond à celle de la gorge 16, de sorte que le déplacement du noyau plongeur engage le verrou 20 dans la gorge 16 ou l'en écarte pour immobiliser axialement le piston 8 ou le libérer, respectivement.

La mise en oeuvre du frein de stationnement à partir d'une position de repos représentée en figure 1 est la suivante. Le ressort 14 de la commande est comprimé et exerce sur le piston 8 une force représentée par la flèche 22, qui pousse le piston en appui sur le verrou 20 engagé dans la gorge 16 du piston 8. Dans cette position, le piston 8 est bloqué par le verrou 20 et le verrou 20 est bloqué par le piston 8

Quand le conducteur commande, par un bouton-poussoir par exemple, le serrage du frein de stationnement, le calculateur commande l'actionneur électromagnétique 18 pour relever le verrou 20 et simultanément un fluide sous pression (du liquide de frein) est amené dans la chambre 6 par la centrale hydraulique HU qui alimente normalement le système principal de freinage pour une commande ou une correction automatisée du freinage par exemple pour un antiblocage des roues, un anti-patinage, un contrôle de trajectoire ou une anti-collision, le circuit hydraulique d'alimentation du système de frein principal étant connecté au cylindre 2.

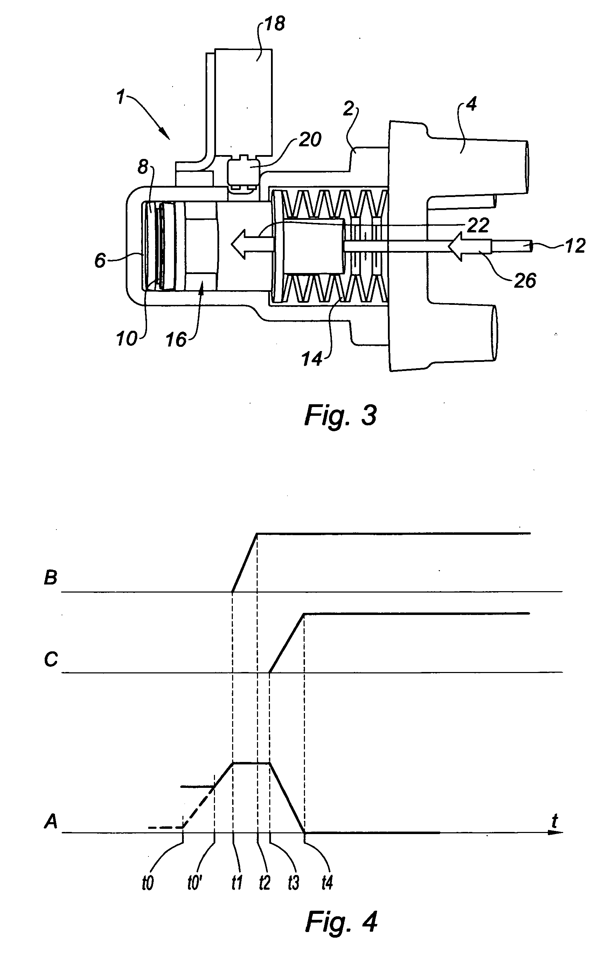

Quand la pression dans la chambre 6 équilibre la charge du ressort 14, la contrainte axiale sur le verrou 20 est annulée et le verrou 20 peut remonter en sortant de la gorge 16. La pression dans la chambre 6 est alors relâchée et le piston 8 est poussé dans la chambre 6 par le ressort 14 en tirant le câble 12 qui serre le frein de stationnement (figure 3).

Cette séquence d'opérations est schématisée sur le diagramme de la figure 4 où l'axe des abscisses représente le temps t, la courbe A la pression dans la chambre 6, la courbe B le mouvement du verrou 20 et la courbe C la force 26 exercée sur le câble 12.

Au moment t0 ou t0', le conducteur donne l'ordre au calculateur de serrer le frein auxiliaire, la pression dans la chambre 6 étant alors nulle ou inférieure à celle nécessaire pour équilibrer la force du ressort 14. La pression dans la chambre 6 monte jusqu'au moment t1 où l'équilibrage de la force du ressort est réalisé, ce qui libère le verrou 20 qui remonte jusqu'au moment t2. Puis au moment t3 un petit instant après le moment t2, la pression hydraulique redescend dans la chambre 6 et simultanément le piston avance et exerce une force de traction 26 sur le câble 12 pour le serrage du frein auxiliaire, jusqu'au moment t4 où la pression dans la chambre 6 devenant nulle, la totalité de la poussée exercée par le ressort 14 est reprise par le câble 12.

Si au cours de la période de maintien du frein de stationnement à l'état serré, la géométrie de ce frein est modifiée par exemple suite à un refroidissement du disque ou du tambour, la raideur du ressort 14 permet de conserver une traction suffisante sur le câble 12 sans modification notable de sa charge de manière à ce que le frein auxiliaire reste serré de façon optimale.

Un avantage important de cet actionneur est que sa mise en oeuvre peut être très rapide. En effet, le débit de fluide sous pression nécessaire au dégagement du verrou 20 est très faible car il faut seulement exercer une mise en pression de la chambre 6 sans pratiquement déplacer le piston 8. Ensuite l'énergie du ressort 14 est libérée quasiment instantanément pour réaliser la course nécessaire d'approche puis de mise en pression des garnitures du dispositif auxiliaire de freinage.

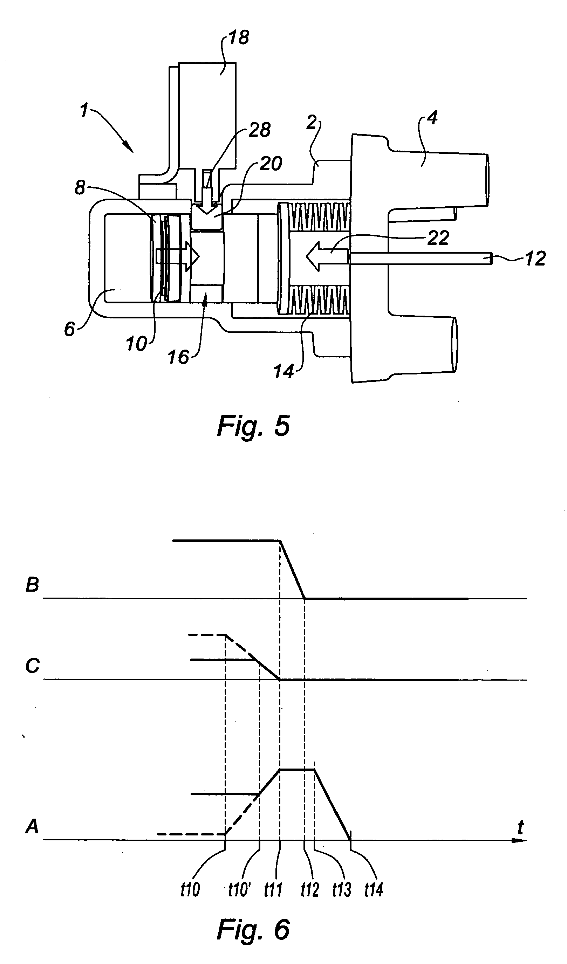

Pour le relâchement du frein de stationnement et le réarmement de l'actionneur 1, le fonctionnement représenté figure 5 est le suivant. Du fluide sous pression est introduit dans la chambre 6 au moyen de la centrale hydraulique HU, le piston 6 est déplacé vers l'arrière en relâchant la traction sur le câble 12 et en desserrant progressivement le frein de stationnement. Pendant ce temps, le verrou 20 est poussé sur le piston 8 par l'actionneur électromagnétique 18 et tombe dans la gorge 16 quand il est aligné avec elle. Le frein de stationnement est entièrement desserré et le ressort 14 est armé, et exerce sur le piston 8 une force représentée par la flèche 22.

Par ailleurs, l'actionneur de frein de stationnement 1 ne perturbe pas le fonctionnement du frein principal pendant le fonctionnement du véhicule. En cours de roulage, le frein de stationnement est desserré, le ressort 14 est armé avec le piston 8 bloqué par le verrou 20, et comme le volume de la chambre hydraulique 6 ne change pas, le circuit hydraulique du frein principal commandé par la pédale de frein ou par un dispositif de correction automatisé ne voit pas de variation et peut fonctionner sans perturbation.

La séquence de desserrage du frein de stationnement est schématisée sur le diagramme de la figure 6 similaire à celui de la figure 4.

Au moment t10 ou t10', le conducteur donne l'ordre de relâcher le frein de stationnement, la pression dans la chambre 6 étant soit nulle au moment t10, soit faible au moment t10', la différence entre la charge du ressort et celle donnée par la pression hydraulique étant la force de traction exercée sur le câble 12. Quand la pression monte, le piston 8 recule jusqu'au moment t11 où le verrou 20 est aligné avec la gorge 16, puis descend au fond de la gorge au moment t12. Au moment t13, la pression hydraulique chute et devient nulle.

Le calculateur qui réalise ces séquences de serrage ou de relâchement du frein de stationnement suivant la demande du conducteur peut réaliser d'autres fonctions et par exemple vérifier que les consignes du conducteur correspondent à des conditions de fonctionnement du véhicule satisfaisantes, notamment une vitesse du véhicule assez basse pour la mise en oeuvre du frein de stationnement.

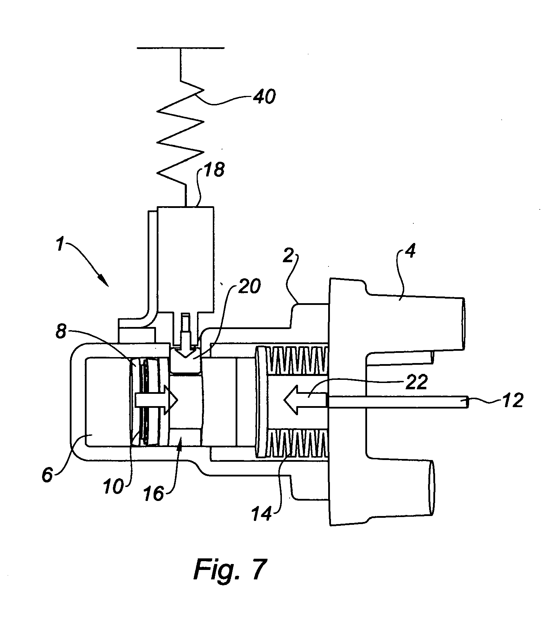

La figure 7 représente un moyen manuel d'intervention utilisable en cas de défaillance de la commande automatique, par exemple en cas de panne de batterie ou d'absence de pression venant de la centrale hydraulique HU pour relâcher le frein et réarmer le ressort 14. Ce moyen comporte un ressort 40 représenté schématiquement et travaillant en compression, qui prend appui d'une part sur un élément fixe par rapport au cylindre 2, et d'autre part sur le noyau de l'actionneur électromagnétique 18.

Pour relâcher le frein de stationnement, il faut armer manuellement le ressort 40 en le comprimant, le verrou 20 fixé en bas du noyau venant en appui sur le piston 8, puis il faut exercer une forte poussée sur la pédale de frein du véhicule, pour développer une pression par exemple de l'ordre de 40 bars. Le circuit hydraulique du système de freinage étant relié au cylindre 2, cette pression pousse le piston 8 et comprime le ressort 14 jusqu'au point où le verrou 20 poussé par le ressort 40 tombe dans la gorge 16 du piston. Le frein de stationnement est relâché et le ressort 14 est armé.

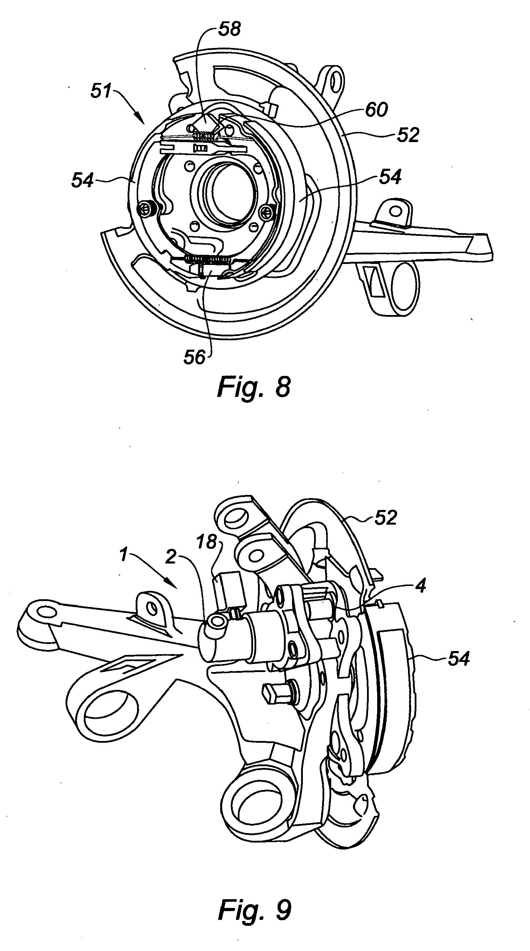

Une application particulièrement avantageuse de l'invention est illustrée aux figures 8 et 9 qui représentent une commande d'un frein de stationnement utilisant un dispositif auxiliaire de freinage 51 à tambour.

Ce dispositif à tambour comporte un plateau support 52 en forme de disque lié au châssis du véhicule et, muni d'une ouverture centrale laissant passer le moyeu d'une roue qui entraîne en rotation un tambour de frein non représenté. Le plateau 52 supporte deux segments 54 munis de garnitures de frottement en arc de cercle qui peuvent pivoter autour d'une extrémité inférieure en prenant appui sur une butée 56 fixée au plateau 52, sous l'action d'une came 58 liée au plateau 52 et agissant sur les extrémités supérieures des segments 54 pour appliquer de manière symétrique une force dirigée vers l'extérieur et pressant les garnitures de frottement sur une surface cylindrique intérieure du tambour afin de freiner sa rotation.

Le tambour du dispositif auxiliaire de freinage est lui-même entouré d'un dispositif principal de freinage non représenté comportant un disque de frein solidaire en rotation du tambour.

Le cylindre 2 de la commande est fixé sur le bras de suspension 4 et est orienté perpendiculairement au plateau 52 et aligné sur la came 58. Le piston coulissant dans le cylindre 2 exerce une traction sur un câble qui actionne la came 58 en la faisant pivoter pour écarter les segments 54.

La fixation du câble de la commande 1 sur la came 58 est semblable à celle d'un câble de traction utilisé pour une commande à levier actionné manuellement, ce qui permet d'équiper un frein de stationnement standard soit d'une commande manuelle soit de la commande automatisée selon l'invention.

## Revendications

1. Commandé de frein de stationnement, en particulier pour véhicule automobile, reliée par un moyen de traction (12) à un moyen de freinage d'une roue du véhicule, comprenant:
- un piston (8) guidé dans un cylindre (2) et ayant une première extrémité reliée au moyen de traction (12) et une seconde extrémité,
- un ressort (14) monté dans le cylindre (2) en appui sur la première extrémité du piston (8) et sollicitant constamment le piston (8) dans le sens correspondant au serrage du frein,
- des moyens d'alimentation du cylindre (2) en fluide sous pression, débouchant dans le cylindre du côté de la deuxième extrémité du piston (8) pour déplacer le piston dans le sens correspondant au desserrage du frein,
**caractérisé en ce que** des moyens (18, 20) de verrouillage du piston (8) dans une position de repos sont commandés par un calculateur et déplaçables entre une position inactive écartée du piston (8) et une position active en contact avec le piston (8).

2. Commande selon la revendication 1, **caractérisée en ce que** le piston (8) comprend une gorge annulaire (16) dans laquelle les moyens de verrouillage (20) sont engagés pour le verrouillage du piston (8) en position de repos.

3. Commande selon la revendication 1, **caractérisée en ce que** les moyens de verrouillage (18) sont à commande électrique ou électromagnétique.

4. Commande selon l'une des revendications 1 à 3, **caractérisée en ce que** le ressort (14) est formé d'un empilage de rondelles Belleville.

5. Commande selon l'une des revendications 1 à 4, **caractérisée en ce que** les moyens de verrouillage comprennent des moyens les sollicitant en appui sur le piston (8) pour le blocage du frein de stationnement en position de repos.

6. Commande selon la revendication 5, **caractérisée en ce qu'**elle comprend un ressort additionnel (40) à armement manuel pour solliciter les moyens de verrouillage en appui sur le piston (8) en cas de défaillance de l'alimentation électrique du véhicule ou des moyens d'alimentation du cylindre (2) en fluide sous pression.

7. Commande selon l'une des revendications 1 à 6, **caractérisée en ce que** le cylindre (2) est relié à un circuit hydraulique d'un système principal de freinage, et peut être alimenté en pression par une pédale de frein ou par une centrale de pression hydraulique d'alimentation du système principal de freinage pour une commande ou une correction automatisée du freinage comme une commande d'antiblocage des roues, d'anti-patinage, de contrôle de trajectoire ou d'anti-collision.

8. Commande selon l'une des revendications 1 à 7, **caractérisée en ce que** la course du ressort (14) est déterminée pour suivre des faibles déplacements du moyen de traction (12) dus à des variations de température du moyen de freinage de manière à conserver une efficacité de freinage suffisante du véhicule en stationnement.

9. Commande selon l'une des revendications 1 à 8, **caractérisée en ce que** le moyen de freinage (51) comprend un frein à tambour monté dans le disque de frein d'une roue du véhicule.

10. Commande selon la revendication 9, **caractérisé en ce que** le cylindre (2) de la commande est solidaire d'un plateau (52) fixe du frein à tambour et est orienté sensiblement perpendiculairement à ce plateau.

## Claims

1. Parking brake control, in particular for a motor vehicle, connected by a pull means (12) to a means for braking a wheel of the vehicle, comprising:
- a piston (8) guided in a cylinder (2) and having a first end connected to the pull means (12) and a second end,
- a spring (14) mounted in the cylinder (2) so as to bear on the first end of the piston (8) and constantly urging the piston (8) in the direction corresponding to the application of the brake,
- means for supplying the cylinder (2) with pressurized fluid which open into the cylinder towards the second end of the piston (8) so as to move the piston in the direction corresponding to the release of the brake,
**characterized in that** means (18, 20) for locking the piston (8) in a rest position are controlled by a calculator and can be moved between an inactive position remote from the piston (8) and an active position in contact with the piston (8).

2. Control according to Claim 1, **characterized in that** the piston (8) comprises an annular groove (16) in which the locking means (20) are engaged for locking the piston (8) in the rest position.

3. Control according to Claim 1, **characterized in that** the locking means (18) are electrically or electromagnetically controlled.

4. Control according to one of Claims 1 to 3, **characterized in that** the spring (14) is formed by a stack of Belleville washers.

5. Control according to one of Claims 1 to 4, **characterized in that** the locking means comprise means urging them to bear on the piston (8) in order to lock the parking brake in the rest position.

6. Control according to Claim 5, **characterized in that** it comprises an additional manual setting spring (40) for urging the locking means to bear on the piston (8) in the event of failure of the electric supply of the vehicle or of the means for supplying the cylinder (2) with pressurized fluid.

7. Control according to one of Claims 1 to 6, **characterized in that** the cylinder (2) is connected to a hydraulic circuit of a main braking system, and can be supplied with pressure by a brake pedal or by a central hydraulic pressure unit for supplying the main braking system in the case of an automated braking command or correction such as a wheel anti-lock command, anti-spin command, trajectory control command or anti-collision command.

8. Control according to one of Claims 1 to 7, **characterized in that** the travel of the spring (14) is determined to follow small movements of the pull means (12) due to temperature variations of the braking means so as to conserve sufficient braking efficiency of the vehicle during parking.

9. Control according to one of Claims 1 to 8, **characterized in that** the braking means (51) comprises a drum brake mounted in the brake disc of a wheel of the vehicle.

10. Control according to Claim 9, **characterized in that** the cylinder (2) of the control is secured to a fixed plate (52) of the drum brake and is oriented substantially perpendicularly to this plate.

## Patentansprüche

1. Feststellbremssteuerung, insbesondere für ein Kraftfahrzeug, die über ein Zugmittel (12) mit einem Mittel zum Bremsen eines Fahrzeugrads verbunden ist, mit:
- einem Kolben (8), der in einem Zylinder (2) geführt ist und ein erstes Ende, das mit dem Zugmittel (12) verbunden ist, und ein zweites Ende aufweist,
- einer Feder (14), die in dem Zylinder (2) in Anlage an dem ersten Ende des Kolbens (8) angebracht ist und den Kolben (8) kontinuierlich in die Richtung beaufschlagt, die dem Anziehen der Bremse entspricht,
- Mitteln zur Versorgung des Zylinders (2) mit unter Druck stehendem Fluid, die auf der Seite des zweiten Endes des Kolbens (8) in den Zylinder münden, um den Kolben in die Richtung zu bewegen, die dem Lösen der Bremse entspricht,
**dadurch gekennzeichnet, dass** Mittel (18, 20) zur Verriegelung des Kolbens (8) in einer Ruhestellung von einem Rechner gesteuert werden und zwischen einer inaktiven, von dem Kolben (8) beabstandeten Stellung und einer aktiven Stellung in Kontakt mit dem Kolben (8) bewegt werden können.

2. Steuerung nach Anspruch 1, **dadurch gekennzeichnet, dass** der Kolben (8) eine ringförmige Nut (16) aufweist, in die die Verriegelungsmittel (20) eingreifen, um den Kolben (8) in der Ruhestellung zu verriegeln.

3. Steuerung nach Anspruch 1, **dadurch gekennzeichnet, dass** die Verriegelungsmittel (18) Verriegelungsmittel mit elektrischer oder elektromagnetischer Steuerung sind.

4. Steuerung nach einem der Ansprüche 1 bis 3, **dadurch gekennzeichnet, dass** die Feder (14) durch aufeinanderliegende Belleville-Scheiben gebildet ist.

5. Steuerung nach einem der Ansprüche 1 bis 4, **dadurch gekennzeichnet, dass** die Verriegelungsmittel Mittel aufweisen, die sie in Anlage an den Kolben (8) beaufschlagen, um die Feststellbremse in der Ruhestellung zu blockieren.

6. Steuerung nach Anspruch 5, **dadurch gekennzeichnet, dass** sie eine zusätzliche Feder (40) mit manuellem Anzug aufweist, um die Verriegelungsmittel bei einem Ausfall der elektrischen Versorgung des Fahrzeugs oder der Mittel zur Versorgung des Zylinders (2) mit unter Druck stehendem Fluid in Anlage an den Kolben (8) zu beaufschlagen.

7. Steuerung nach einem der Ansprüche 1 bis 6, **dadurch gekennzeichnet, dass** der Zylinder (2) mit einem Hydraulikkreis eines Hauptbremssystems verbunden ist und über ein Bremspedal oder eine Hydraulikdruckanlage zur Versorgung des Hauptbremssystems für eine Steuerung oder eine automatisierte Korrektur der Bremsung, wie eine Räder-Antiblockiersteuerung, eine Antischlupfsteuerung, eine Steuerung zur Spurkontrolle oder eine Antikollisionssteuerung, mit Druck versorgt werden kann.

8. Steuerung nach einem der Ansprüche 1 bis 7, **dadurch gekennzeichnet, dass** die Bahn der Feder (14) so bestimmt ist, dass sie geringfügigen Verlagerungen des Zugmittels (12) aufgrund von Temperaturänderungen des Bremsmittels folgt, um eine ausreichende Bremswirkung für das geparkte Fahrzeug beizubehalten.

9. Steuerung nach einem der Ansprüche 1 bis 8, **dadurch gekennzeichnet, dass** das Bremsmittel (51) eine Trommelbremse umfasst, die in der Bremsscheibe eines Fahrzeugrads angebracht ist.

10. Steuerung nach Anspruch 9, **dadurch gekennzeichnet, dass** der Zylinder (2) der Steuerung fest mit einer feststehenden Scheibe (52) der Trommelbremse verbunden und im Wesentlichen senkrecht zu dieser Scheibe ausgerichtet ist.
